**Europäisches Patentamt**

**European Patent Office**

**Office européen des brevets**

(11) Veröffentlichungsnummer : **0 065 614**
**B1**

# (12) EUROPÄISCHE PATENTSCHRIFT

(45) Veröffentlichungstag der Patentschrift :
28.08.85

(51) Int. Cl.⁴ : **H 02 P 5/40**

(21) Anmeldenummer : 82100472.8

(22) Anmeldetag : 23.01.82

(54) Reaktionsschneller Servoantrieb.

(30) Priorität : 23.05.81 DE 3120559

(43) Veröffentlichungstag der Anmeldung :
01.12.82 Patentblatt 82/48

(45) Bekanntmachung des Hinweises auf die Patenterteilung : 28.08.85 Patentblatt 85/35

(84) Benannte Vertragsstaaten :
CH DE FR GB IT LI

(56) Entgegenhaltungen :
DE-A- 2 727 471
DE-A- 2 915 987
FR-A- 2 384 174
FR-A- 2 392 525

(73) Patentinhaber : ROBERT BOSCH GMBH
Postfach 50
D-7000 Stuttgart 1 (DE)

(72) Erfinder : Zimmermann, Peter, Dr.-Ing.
Aubergenviller Allee 32
D-6110 Dieburg (DE)
Erfinder : Teape, John W., Dr.
25 Maple Way
Melbourn Royston Hert SG 8 6BD (GB)

(74) Vertreter : Uhlig, Helge, Ing.-Grad.
ROBERT BOSCH GMBH Geschäftsbereich Industrieausrüstung Patente und Lizenzen Postfach 11 49
D-6120 Erbach/Odenwald (DE)

## Beschreibung

### Stand der Technik

Die Erfindung geht aus von einem reaktionsschnellen Servoantrieb nach der Gattung des Hauptanspruches. Zur genauen, schnellen Steuerung von Bewegungsabläufen werden häufig, insbesondere bei numerisch gesteuerten Werkzeugmaschinen, Servoantriebe erforderlich, welche bei einer Drehzahl Null eine ausreichende Steifigkeit und über einen großen Drehzahlbereich, von minimalen Drehzahlwerten bis hinauf zur geforderten maximalen Drehzahl einen runden Lauf mit präzise steuerbarem Drehmoment aufweisen. Hierzu werden üblicherweise Gleichstrommotoren verwendet, die jedoch insbesondere wegen der erforderlichen Kommutierung erhebliche Nachteile aufweisen.

Um diese Nachteile zu vermeiden ist es bekannt, selbstgesteuerte Synchronmaschinen zu verwenden, die einen aufwendigen — analoge oder hochaufgelöste digitale Stellungssignale liefernden — Polradlagegeber benötigen (Siehe DE-OS 29 15 987).

### Vorteile der Erfindung

Der erfindungsgemäße Servoantrieb mit den in den Ansprüchen gekennzeichneten Merkmalen ermöglicht eine Selbststeuerung der Synchronmaschine mit einem sehr einfachen Polradlagegeber, einer sehr hohen Maschinenausnutzung und eine vereinfachte Ansteuerung der Leistungsverstärker für die einzelnen Phasenströme. Der Polradlagegeber läßt sich leicht, zusammen mit weiteren elektronischen Bauteilen zur Signalverarbeitung in das Gehäuse des Synchronmotors integrieren und kann insbesondere bei Verwendung eines gleichartigen, bürstenlosen Tachogenerators für dessen Kommutierung mitverwendet werden.

### Zeichnungen

Ausführungsbeispiele der Erfindung sind in drei Zeichnungsblättern dargestellt und in der nachfolgenden Beschreibung näher erläutert. Es zeigen

Figur 1 Spannungen und Ströme der einzelnen Phasenwicklungen,

Figur 2 einen Polradlagegeber,

Figur 3 eine Signaltabelle der Einzelgeber,

Figur 4 das Schaltungsprinzip für eine 3-phasige Synchronmaschine,

Figur 5 eine Drehstrombrückenschaltung als Vierquadrantensteller und

Figur 6 einen Schnitt durch einen Teil einer Synchronmaschine.

### Beschreibung der Erfindung

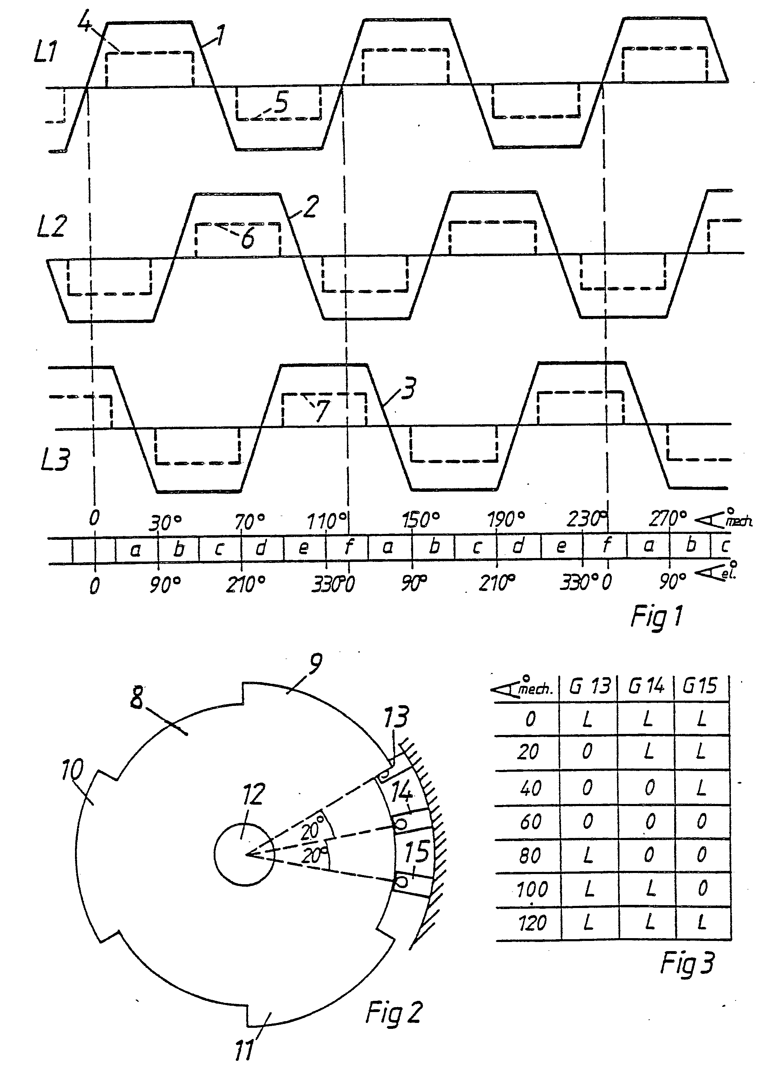

In Fig. 1 sind die Spannungen (induzierte Ständer-EMK) und die Ströme der einzelnen Phasenwicklungen über etwa eine halbe Ankerdrehung einer dreiphasigen, sechspoligen Synchronmaschine dargestellt. Durch einen entsprechenden Aufbau der Synchronmaschine, der sich z.B. bei einem permanentmagnetisierten Anker durch eine Schrägnutung der Ständerbleche, schräg am Ankerumfang verteilte oder schräg magnetisierte Permanentmagnete mit entsprechendem Polbedeckungswinkel erzielen läßt, wird eine trapezförmige Ständer-EMK, 2 und 3 gewählt. Besonders ausgeprägt wird die Trapezform bei Verwendung einer Einlochwicklung mit einer Nut je Pol und Phase. Bei diesem Ausführungsbeispiel mit 18 Nuten bei 6 Polen und 3 Phasen, wird eine besonders günstige Maschinenausnutzung möglich. Der trapezförmige Spannungsverlauf 1 der Wicklung L1 weist von einem Winkel elektrisch und mechanisch 0 ausgehend einen linearen Spannungsanstieg bis 30° elektrisch (10° mechanisch) auf. Ab hier bleibt die Spannung bis 150° elektrisch (50° mechanisch) konstant, um von hier aus bis zu 210° elektrisch (70° mechanisch) linear auf einen gleichgroßen, negativen Wert linear abzufallen. Danach bleibt er bis 330° elektrisch (110° mechanisch) auf konstantem negativen Wert, um von hier aus linear bis zur gleichen positiven Spannung wieder anzusteigen. Dieser Verlauf wiederholt sich dreimal bis zur vollen Ankerumdrehung (360° mechanisch). An den Phasenwicklungen L2 und L3 wird der gleiche Spannungsverlauf 2 und 3 jedoch mit einer Phasenverschiebung von jeweils 120° elektrisch (40° mechanisch) bewirkt.

Durch eine später erläuterte Umschaltung werden die Phasenwicklungen nur während der Winkelbereiche mit konstanter Spannung jeweils entsprechend einem vorgegebenen Stromsollwert mit Strömen in positiver oder negativer Richtung beaufschlagt. Im ersten Quadranten kann dies ein Strom 4 sein, der in der Phasenwicklung L1 bei 30° elektrisch einsetzt bis 150° konstant bleibt, danach aussetzt um bei 210° elektrisch in entgegengesetzter Richtung 5 wieder einzusetzen. Bis 330° elektrisch bleibt er wieder konstant, setzt danach aus um bei 30° elektrisch in gleicher Weise wieder wie zuvor einzusetzen. Die Ströme 6 und 7 durch die Phasenwicklungen L2 und L3 folgen mit gleicher Größe und Richtung um jeweils 120° elektrisch in der Phase versetzt.

Wie sich hieraus erkennen läßt, erfolgt eine Stromumschaltung jeweils nach Winkelbereichen von 60° elektrisch bzw. 20° mechanisch, wobei sich in einem Drehwinkelbereich von 360° elektrisch, sechs Winkelbereiche a bis f ergeben, in denen keine Stromumschaltung erforderlich wird.

Die Winkelbereiche a bis f mit gleicher Umschaltung wiederholen sich danach entsprechend der Polpaarzahl noch dreimal bis zur vollen Ankerumdrehung. In allen Winkelbe-

reichen ergibt sich ein gleichgroßer konstanter Summenstrom, der bei einer Sternschaltung der Wicklungen immer durch zwei Phasenwicklungen fließt.

Da das Drehmoment der Synchronmaschine in Abhängigkeit von einer Spannungskonstanten K bei konstanter Winkelgeschwindigkeit ω weitgehend proportional dem Strom J ist,

$$M = (K \cdot J)/\omega$$

ergibt sich durch den konstanten Summenstrom in allen Drehzahlbereichen zu jedem Drehwinkel ein konstantes Drehmoment.

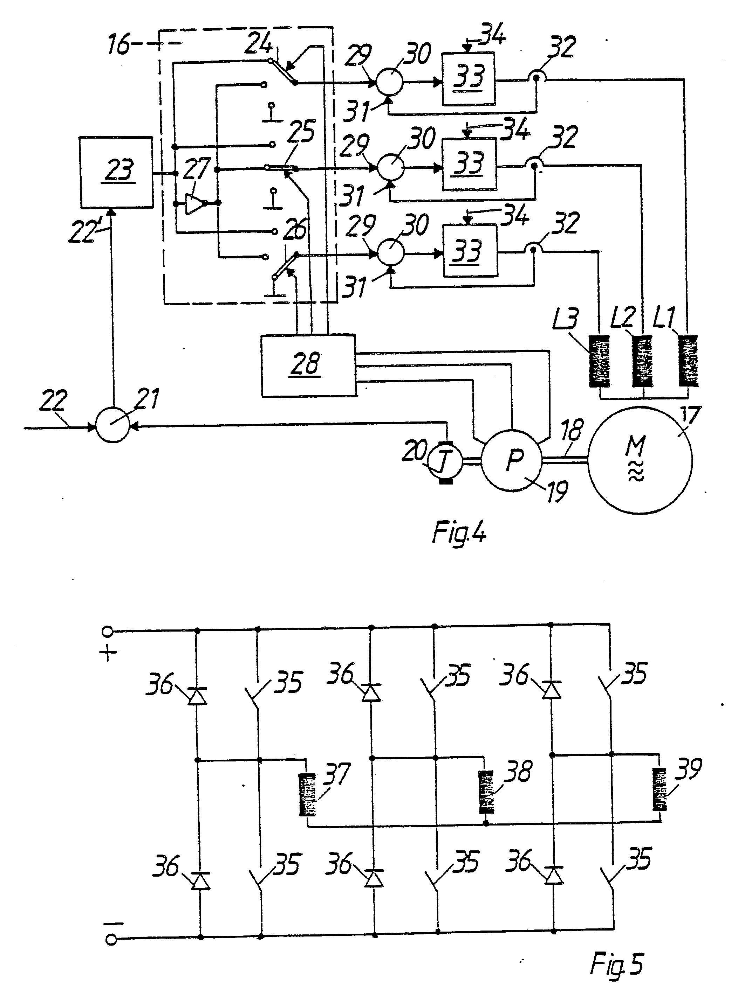

Zur Umschaltung in den sechs Winkelbereichen a bis f bedarf es nun keiner sechs Einzelgeber im Polradlagegeber, sondern es genügen drei Schaltsignalgeber die entsprechend der Boole'schen Algebra nach entsprechender Dekodierung bis zu 8 Positionen festlegen können. Für die Festlegung der Winkelpositionen können einfache, kontaktlose Signalgeber wie z. B. Gabellichtschranken verwendet werden. In Fig. 2 ist die Segmentscheibe 8 eines Polradlagegebers für eine 6-polige Synchronmaschine dargestellt, an deren Umfang drei über einen Winkelbereich von 60° vorstehende Segmente 9, 10 und 11 vorgesehen sind, deren Abstand voneinander gleichfalls 60° beträgt. Die Segmente greifen beim Drehen der Synchronmaschinenwelle 12 in drei Gabellichtschranken 13, 14 und 15 ein, die in einem Winkelabstand von 20° voneinander am Umfang feststehend angeordnet sind. So ergeben sich über einen Winkelbereich von 120°, der bei einer Polpaarzahl 3 einem Winkel von 360° elektrisch entspricht, sechs unterschiedliche Signalkombinationen gemäß Fig. 3. Der Polradlagegeber kann in ähnlicher Weise auch mit Hallelementen, induktiven, kapazitiven oder sonstigen Gebern aufgebaut werden, soweit diese bei maximaler Drehzahl noch ausreichend schnell schalten.

In Fig. 4 ist das Schaltungsprinzip für eine dreiphasige Synchronmaschine 17 mit Permanentmagneterregung dargestellt. Direkt angetrieben von der Welle 18 der Synchronmaschine wird ein Polradlagegeber 19 und ein Tachogenerator 20. Das Ausgangssignal des Tachogenerators wird in einem Vergleicher 21 mit einem Drehzahlsollwertsignal 22 verglichen und ein Drehzahldifferenzsignal 22 erzeugt, das einem Drehzahlregler 23 zugeführt wird.

Die Ausgangsspannung des Drehzahlregelkreises 23 entspricht einem Stromsollwert, der einer Stromsollwertverteilungsstufe 16 zugeführt wird und dort an je einem ersten Anschluß von drei dreistufigen elektronischen Umschaltern 24, 25 und 26 und einem Inverter 27 liegt. Der invertierte Stromsollwert ist vom Ausgang des Inverters 27 an je einen zweiten Anschluß der drei Umschalter 24, 25 und 26 geführt, deren dritter Anschluß am Stromsollwert-Nullpotential liegt.

Die drei Signalspannungen der Einzelgeber des Polradlagegebers 19 liegen an Eingängen einer Dekodierstufe 28, die Steuersignale für die drei Umschalter 24, 25 und 26 liefert. Die Umschaltung erfolgt hierbei derart, daß jeweils drei Stromsollwerte ausgewählt werden, die dem in Fig. 1 dargestellten Strom der einzelnen Phasenwicklungen entsprechen. Diese Stromsollwerte 29 sind zur unterlagerten Stromregelung jeweils einem von drei Stromwertvergleichern 30 zugeführt und werden dort mit Stromistwertsignalen 31 aus Stromistwertgebern 32 verglichen, die z. B. aus drei potentialfreien Stromwandlern bestehen können, welche in den Zuleitungen zu jeder Phasenwicklung L1, L2 und L3 liegen. Die Ausgangssignale aus den Stromvergleichern 30 sind jeweils drei Stromreglern 33 zugeführt, welche die Ströme für die drei Phasenwicklungen L1, L2 und L3 der Synchronmaschine aus einer Betriebsspannungsquelle regeln, die über die Zuleitungen 34 zugeführt sind.

Wie ansich bekannt, können die Stufen 30 und 33 selbstgetaktete Vierquadrantensteller sein, die zur Reduzierung der Schaltverluste gemäß der DE-OS 31 19 161 ausgebildet sind. Da es sich bei jedem vorgegebenen Drehmomentenbedarf in allen drei Phasenwicklungen um Ströme handelt, die in den einzelnen Drehbereichen gemäß Fig. 1 konstant sind und abgesehen von der Stromrichtung die gleiche Größe aufweisen, können die Vierquadrantensteller wesentlich einfacher aufgebaut sein, leichter gesteuert werden und/oder kombiniert werden. So kann eine Wechselrichterstufe in Drehstrombrückenschaltung . gemäß Fig. 5 als Vierquadrantensteller Verwendung finden, bei der eine Betriebsgleichspannung über sechs selbstgetaktete Halbleitereinwegschalter 35, denen Dreilaufdioden 36 parallelgeschaltet sind, derart getaktet und umgeschaltet werden, daß durch die Phasenwicklungen 37, 38 und 39 die erforderlichen Ströme fließen. Zur Reduzierung der Schaltverluste beim Ein- und Austakten ist es möglich, immer nur einen der Halbleitereinwegschalter 35 zu takten, während die übrigen entsprechend der Stromaufteilung und Stromrichtung gemäß Fig. 1 die Umschaltung übernehmen.

Die Wahl der Pol- und Phasenzahl ist weitgehend vom Anwendungsfall abhängig, wobei z. B. bei vier Phasen jeweils zwei Phasenwicklungen mit Strom beaufschlagt werden oder bei sechs Phasen, zusätzlich zu den in Fig. 1 dargestellten Phasenströme, für die weiteren drei Phasenwicklungen drei, jeweils um 60° elektrisch in der Phasen zu den Strömen für L1, L2 und L3 verschobene weitere Phasenströme zu Schalten sind. Hierbei fließen die einzelnen zusätzlichen Ströme während der gleichen Winkelbereiche nur in entgegengesetzter Richtung. Wird die erste Phase wie L1 (Fig. 1) beaufschlagt, führt die vierte Phase in den gleichen Winkelbereichen einen Strom in entgegengesetzter Richtung. Durch die zweite Phasenwicklung fließt ein Strom in entgegengesetzter Richtung wie bei L3 dargestellt während die dritte Phasenwicklung entsprechend L2 und die fünfte Phasenwicklung entsprechend L3 beaufschlagt wird. Durch die sechste Phase fließt ein Strom in entgegengesetzter Richtung zum Strom (L2) in der dritten Phasenwicklung.

Hierdurch können der Polradlagegeber 19, der Dekodierer 28, die Stromsollwertverteilungsstufe 16 in gleicher Weise aufgebaut sein, wobei für die zusätzlichen Phasenwicklungen lediglich die Stromsollwerte 29 aus der Stromsollwertverteilerstufe 16 zu invertieren sind. Es kann bei gleichem Aufbau auch ein zweiter Vierquadrantensteller gemäß Fig. 5 Verwendung finden, bei dem mit den gleichen Ansteuersignalen für die Halbleitereinwegschalter 35 entsprechend andere Halbleitereinwegschalter des zweiten Vierquadrantenstellers gesteuert werden. Hierdurch ergeben sich für das gleiche Drehmoment kleinere Ströme, was vor allem bei sehr großen Antrieben von Vorteil sein kann.

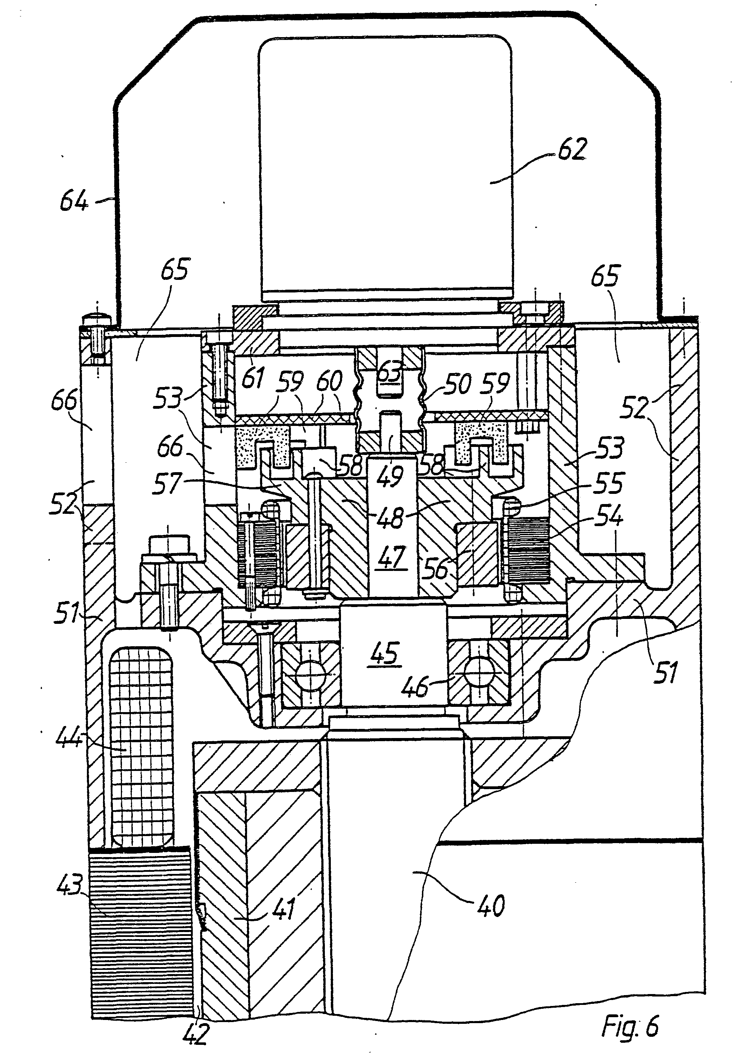

In Fig. 6 ist das hintere (vom Antriebswellenstumpf abgewandte) Ende einer erfindungsgemäßen Synchronmaschine dargestellt. Auf der Ankerwelle 40 sind in bekannter Weise Permanentmagnete 41 befestigt, mit denen schräg magnetisierte Magnetpole ausgebildet sind. Außerhalb des Luftspaltes 42 liegt der geblechte Ständer 43 mit der Einlochwicklung 44. Das hintere Ende der Welle ist dreimal, abgestuft, verjüngt, wobei auf der ersten Wellenstufe 45 das Lager 46, einer zweiten Wellenstufe 47 ein Geberteil 48 und der dritten Wellenstufe 49 eine Wellenbalgkupplung 50 befestigt ist. Die hintere Lagerschale 51 weist an ihrem Umfang eine zylinderförmige Verlängerung 52 auf, so daß sich eine topfförmige Gehäuseverlängerung ergibt. Im Topfinnern ist an der Lagerschale 51 ein weiteres Gehäuse 53 befestigt, in dem sich Statorbleche 54, Statorwicklungen 55 und der Permanentmagnetanker 56 eines Tachogenerators befinden.

Die Ankermagnete 56 sind auf dem Geberteil 48 aufgebracht, das ein tellerförmig erweitertes Teil 57 aufweist. Auf diesem Tellerteil 57 befinden sich achsparallel nach hinten ragende Kreissegmente 58, die in Gabellichtschranken 59 eingreifen welche mit ihren Anschlüssen auf eine Leiterplatte 60 festgelötet sind. Diese Leiterplatte 60 trägt weitere nicht dargestellte elektronische Bauelemente, die über gedruckte Leiterbahnen miteinander verbunden sind und der Signalaufbereitung dienen. Das Gehäuse 53 ist nach hinten mit einem Flansch 61 abgedeckt, der einen Stellungsgeber 62 trägt, dessen Welle 63 über die Balgkupplung 50 an den Synchronmotor angekuppelt ist.

Das Tellerteil 57 mit den Kreissegmenten 58 und die Gabellichtschranken 59, welche in die äußeren Kreissegmente eingreifen, bilden den Polradlagegeber. Die inneren Kreissegmente schalten Zusatzlichtschranken für den Tachogenerator, der eine andere Polzahl und/oder Phasenzahl aufweist, als der Synchronmotor. Dies kann erforderlich werden, wenn das Tachogeneratorausgangssignal weitgehend frei von Spannungsschwankungen sein soll, um auch bei extrem niedrigen Drehzahlen einen gleichförmigen Lauf des Synchronmotors zu gewährleisten.

Der Stellungsgeber 62 der ein hochauflösender digitaler Geber, ein Resolver usw. sein kann, dient der Lageregelung des anzutreibenden Maschinenteils z. B. über eine numerische Steuerung.

In den Fällen, wo dieser Lagegeber nicht erforderlich ist, oder andere Lagegeber direkt mit dem Maschinenteil verbunden sind, kann dieser entfallen und anstelle der den Stellungsgeber 62 überdeckenden Schutzhaube 64 eine Abdeckplatte angebracht werden.

Die Zwischenräume 65 zwischen den Verlängerungen 52 der Lagerschale und dem wesentlich kleineren Gehäuse 53 für den Tachogenerator und den Polradlagegeber, können als Anschlußräume für die Zu- und Abgangsleitungen dienen, dür die die Öffnungen 66 vorgesehen sind.

## Patentansprüche

1. Reaktionsschneller Servoantrieb mit einer weitgehend über den vollen Drehzahlbereich stetigen Vierquadrantensteuerung, einer umrichtergespeisten, über einen Polradlagegeber und Leistungsverstärker hoher Schaltfrequenz selbstgesteuerten Synchronmaschine, bei der sich bei drehendem Anker über die induzierte elektromotorische Kraft (EMK) in den einzelnen Phasenwicklungen (L1, L2, L3) eine Wechselspannung aufbaut, deren Halbwellen weitgehend einen trapezförmigen Verlauf (1, 2, 3) nehmen, dadurch gekennzeichnet, daß der die Leistungsverstärker (33) steuernde Polradlagegeber (19) diskrete Drehstellungssignale jeweils bei den Winkelstellungen abgibt, zu denen ein Stromfluß (4 bis 7) durch eine der Phasenwicklungen (L1, L2, L3) beginnt und/oder endet, daß die Stromzufuhr zu den Phasenwicklungen (L1, L2, L3) nur zu den Drehwinkelbereichen erfolgt, zu denen die trapezförmigen Spannungen (1, 2, 3) auf konstanten Werten verlaufen, und daß die Summe aller Ströme (4, 6, 7) durch die Phasenwicklungen (L1, L2, L3) bei jedem Drehwinkel einen im wesentlichen konstanten Wert aufweist.

2. Servoantrieb nach Anspruch 1, dadurch gekennzeichnet, daß bei einer permanentmagnetisierten Synchronmaschine (17) — zum Erzielen einer trapezförmigen induzierten Ständer-EMK (1, 2, 3) — eine in an sich bekannten Weise ausgebildete Nutschrägung der Ständerbleche (43) und/oder schräg am Ankerumfang aufgebrachte Magnete und/oder schräg magnetisierte Magnete (41) aufweist und die Schrägung zusammen mit dem Polbedeckungswinkel derart gewählt ist, daß sich die erforderliche Trapezform (1, 2, 3) ergibt.

3. Servoantrieb nach Anspruch 2, dadurch gekennzeichnet, daß die Schrägung über einen Drehwinkelbereich ausgeführt ist, der dem Phasenwinkelbereich entspricht, in dem ein Spannungsanstieg oder Spannungsabfall der trapezförmigen unduzierten Ständer-EMK (1, 2, 3) erfolgt, und daß der Ständer (43) eine Einlochwicklung (44) mit einer Nut je Pol und Phase aufweist.

4. Servoantrieb nach einem der Ansprüche 1 bis 3, dadurch gekennzeichnet, daß die Drehstellungssignale von einer, der Phasenzahl entsprechenden Anzahl von Gebern (13, 14, 15) erzeugt sind, diese einem Dekodierer (28) zugeführt sind, der die Stromverteilung auf die einzelnen Phasenwicklungen (L1, L2, L3) steuert.

5. Servoantrieb nach einem der Ansprüche 1 bis 4, dadurch gekennzeichnet, daß der Polradlagegeber (19) die gleiche oder eine kleinere Anzahl Einzelgeber (13, 14, 15) wie die Phasenzahl aufweist, die Einzelgeber über einen oder mehrere vom Ankerdrehwinkel vorgegebenen Drehwinkelbereiche ein Ausgangssignal liefern diese Signale einem Dekodierer (28) zugeführt sind, der für jede Phase drei Ausgangsgrößen liefert.

6. Servoantrieb nach einem der Ansprüche 1 bis 5, dadurch gekennzeichnet, daß die Drehstellungssignale einer Stromsollwertverteilungsstufe (16) zugeführt sind, die eine der Phasenzahl entsprechende Anzahl Dreistellungsumschalter (24, 25, 26) aufweist, die einen vorgegebenen Stromsollwert je nach Drehstellung invertiert, nichtinvertiert oder einen Stromsollwert Null auf Eingänge von getakteten Leistungsverstärkern (33) für jede Phase geben.

7. Servoantrieb nach einem der Ansprüche 1 bis 6 mit drei oder sechs Phasenwicklungen, dadurch gekenzeichnet, daß der trapezförmige Spannungsverlauf (1, 2, 3) in den einzelnen Phasenwicklungen (L1, L2, L3) einen Spannungsanstieg über einen Phasenwinkel von 60° elektrisch, einer konstanten positiven Spannung über 120° elektrisch, einem Spannungsabfall von 60° elektrisch und einer konstanten negativen Spannung über 120° elektrisch entspricht, und daß die Phasenströme entsprechend dem vorgebenem Drehmomentenbedarf, im ersten Phasenwinkelbereich von 120° elektrisch in einer Richtung, in den folgenden 60° elektrisch gesperrt und den darauf folgenden 120° elektrisch in entgegengesetzter Richtung fließen.

8. Servoantrieb nach einem der Ansprüche 1 bis 7 mit einem in das Motorgehäuse integrierten Polradlagegeber, dadurch gekennzeichnet, daß der Polradlagegeber (58, 59, 60) und ein Tachogenerator (54, 55, 56) eine Einheit bilden, der Tachogenerator nach dem gleichen Prinzip als bürstenloser Synchrongenerator aufgebaut ist und Signale und/oder Teile des Polradlagegebers, der Signalaufbereitung, der Spannungsversorgung, der Einzelgeber (59) und/oder der Dekodierung gleichzeitig der Synchronmaschinenselbststeuerung wie auch der Kommutierung der Tachogeneratorsignale dienen.

## Claims

1. Quick-reaction servo drive system comprising four-quadrant control which is largely constant over the full range of rotational speeds, a converter-fed synchronous machine which is self-regulated via a rotor position sensor and power amplifier with high switching frequency and in which, with rotating armature, an alternating voltage builds up in the individual phase windings (L1, L2, L3) due to the induced electromotive force (EMF), the halfwaves of which voltage largely follow a trapezoidal curve (1, 2, 3), characterised in that the rotor position sensor (19) controlling the power amplifier (33) delivers discrete rotational position signals in each case at the angular positions at which a current flow (4 to 7) through one of the phase windings (L1, L2, L3) begins and/or ends, that the phase windings (L1, L2, L3) are supplied with current only at the range of rotational angles at which the trapezoidal voltages (1, 2, 3) are at constant values and that the sum of all currents (4, 6, 7) through the phase windings (L1, L2, L3) has at each rotational angle an essentially constant value.

2. Servo drive according to Claim 1, characterised in that in a permanent-magnet synchronous machine (17) — in order to achieve a trapezoidal induced stator-EMF (1, 2, 3) — the slots of the stator laminations (43) are provided with skewing in a manner known in itself and/or magnets are attached skewed to the armature periphery and/or magnets (41) with skewed magnetisation are provided and the skewing, in conjunction with the pole pitch angle, is selected to be such that it results in the required trapezoidal wave shape (1, 2, 3).

3. Servo drive according to Claim 2, characterised in that the skewing is carried out over a range of rotational angles which corresponds to the range of phase angles in which the voltage of the trapezoidal induced stator-EMF (1, 2, 3) rises or falls and that the stator (43) is provided with a single-coil winding (44) having one slot per pole and phase.

4. Servo drive according to one of Claims 1 to 3, characterised in that the rotational position signals are generated by a number of sensors (13, 14, 15) which corresponds to the number of phases, and that these signals are supplied to a decoder (28) which controls the distribution of current to the individual phase windings (L1, L2, L3).

5. Servo drive according to one of Claims 1 to 4, characterised in that the rotor position sensor (19) has the same or a smaller number of individual sensors (13, 14, 15) as the number of phases, that the individual sensors supply an output signal over one or several ranges of rotational angle predetermined by the rotational angle of the armature, and that these signals are supplied to a decoder (28) which supplies three output values for each phase.

6. Servo drive according to one of Claims 1 to 5, characterised in that the rotational position signals are supplied to nominal-current-value distribution stage (16) which has a number of three-position change-over switches (24, 25, 26) which corresponds to the number of phases, which switches supply a predetermined nominal current value which is, depending on rotational position, inverted, noninverted or value of zero to inputs of clocked power amplifiers (33) for each phase.

7. Servo drive according to one of Claims 1 to 6, having three or six phase windings, characterised in that the trapezoidal voltage curve (1, 2, 3) in the individual phase windings (L1, L2, L3) corresponds to a voltage rise over a phase angle of 60° electric, to a constant positive voltage over 120° electric, to a voltage drop of 60° electric and to a constant negative voltage over 120° electric, and that the phase currents, corresponding to the predetermined torque requirement, flow in one direction in the first phase angle range of 120°, are blocked in the following 60° electric and flow in the opposite direction in the subsequent 120° electric.

8. Servo drive according to one of Claims 1 to 7, comprising a rotor position sensor which is integrated into the motor housing, characterised in that the rotor position sensor (58, 59, 60) and a tachometer generator (54, 55, 56) form one unit, that the tachometer generator is constructed in accordance with the same principle as a brushless synchronous generator and signals and/or parts of the rotor position sensor, of the signal processing system, of the power supply, of the individual sensors (59) and/or of the decoding system are simultaneously used for self regulation of the synchronous machine and for commutation of the tachometer generator signals.

## Revendications

1. Servo-moteur à réaction rapide avec une commande permanente sur quatre quadrants dépassant très largement toute la plage des vitesses de rotation, une machine synchrone alimentée par un courant non redressé, commandé par l'intermédiaire d'un capteur de position de roue polaire et d'un amplificateur de puissance à fréquence de commutation élevée, dans lequel lorsque l'induit tourne, la force électromotrice induite établit dans les différents enroulements de phase (L1, L2, L3) une tension alternative dont les demi-ondes ont un tracé très largement trapézoïdal (1, 2, 3), caractérisé en ce que le capteur de position de roue polaire (19) qui commande l'amplificateur de puissance (33) fournit des signaux de position de rotation, distincts, pour chacune des positions angulaires, et pour lesquels le passage du courant (4 à 7) à travers l'un des enroulements de phase (L1, L2, L3) commence et/ou se termine, en ce que l'alimentation en courant des enroulements de phase (L1, L2, L3) ne se fait que dans les plages d'angle de rotation dans lesquelles les tensions trapézoïdales (1, 2, 3) sont à des niveaux constants, et en ce que la somme de tous les courants (4, 6, 7) dans les enroulements de phase (L1, L2, L3) a une valeur essentiellement constante pour tout angle de rotation.

2. Servo-moteur selon la revendication 1, caractérisé en ce que pour une machine synchrone (17) à aimantation permanente, pour obtenir une force électromotrice de stator (1, 2, 3) induite de façon trapézoïdale, une inclinaison de rainure connue en soi présente des tôles de stator (43) et/ou des aimants mis en place en biais à la périphérie de l'induit et/ou des aimants aimantés en biais (41) et l'inclinaison ainsi que l'angle de recouvrement de pôle sont choisis de façon à obtenir la forme trapézoïdale nécessaire (1, 2, 3).

3. Servo-moteur selon la revendication 2, caractérisé en ce que l'inclinaison est réalisée sur une plage d'angles de rotation correspondant à la plage de l'angle de phase dans laquelle se produit une montée ou une chute de la valeur de la tension de la force électromotrice (1, 2, 3) induite, de forme trapézoïdale, et en ce que le stator (43) comporte un enroulement à un trou (44) avec chaque fois une rainure par pôle et par phase.

4. Servo-moteur selon l'une des revendications 1 à 3, caractérisé en ce que les signaux de position de rotation sont engendrés par un nombre de capteurs (13, 14, 15) correspondant au nombre de phases, signaux qui sont fournis à un décodeur (28) qui commande la répartition du courant entre les différents enroulements de phase (L1, L2, L3).

5. Servo-moteur selon l'une des revendications 1 à 4, caractérisé en ce que le capteur de position de roue polaire (19) présente un nombre de capteurs distincts (13, 14, 15) égal ou inférieur à celui des phases, les différents capteurs fournissant un signal de sortie dans une ou plusieurs plages d'angles de rotation prédéterminées par l'angle de rotation de l'induit, ces signaux étant appliqués à un décodeur (28) qui fournit trois grandeurs de sortie pour chaque phase.

6. Servo-moteur selon l'une des revendications 1 à 5, caractérisé en ce que les signaux de position de rotation sont appliqués à un étage de répartition des intensités de consigne (16), qui comporte un nombre de commutateurs à trois positions (24, 25, 26) correspondant au nombre de phases, commutateurs qui sont inversés, non inversés ou qui fournissent une intensité nulle aux entrées d'amplificateur de puissance (33) commandées en cadence pour chaque phase, par une intensité de consigne, prédéterminée.

7. Servo-moteur selon l'une des revendications 1 à 6 avec trois ou six enroulements de phase, servo-moteur caractérisé en ce que le tracé trapézoïdal de la tension (1, 2, 3) correspond dans les différents enroulements de phase (L1, L2) à une montée de tension sur un angle de phase de 60° électriques, à une tension positive constante sur un angle électrique de 120°, à une chute de tension de 60° électriques et à une tension négative constante sur un angle électrique de 120°, et en ce que suivant la demande de couple, prédéterminée, les courants de phase passent pour la première plage angulaire de phase de 120° électriques dans une direction, sont bloqués dans la plage angulaire suivante de 60° électriques, puis passent dans la direction opposée pour l'angle électrique suivant de 120°.

8. Servo-moteur selon l'une des revendications 1 à 7 ayant un capteur de position de roue polaire intégré au boitier du moteur, caractérisé en ce que le capteur de position de roue polaire (58, 59, 60) et un générateur tachymétrique (54, 55, 56) forment un ensemble, le générateur tachymétrique étant réalisé suivant le même principe qu'un générateur synchrone sans balai et des signaux et/ou des parties du capteur de position de roue polaire servent à la préparation des signaux, à l'alimentation en tension des différents capteurs (59) et/ou au décodage simultané de la commande automatique de la machine synchrone ainsi qu'à la commutation des signaux du générateur tachymétrique.

0 065 614

Fig 1

Fig 2

| $\angle^\circ_{mech.}$ | G 13 | G 14 | G 15 |
|---|---|---|---|
| 0 | L | L | L |
| 20 | 0 | L | L |
| 40 | 0 | 0 | L |
| 60 | 0 | 0 | 0 |
| 80 | L | 0 | 0 |
| 100 | L | L | 0 |
| 120 | L | L | L |

Fig 3

1

Fig. 4

Fig. 5

0 065 614

Fig. 6